# FASCICULE DE BREVET EUROPEEN

(11) **EP 2 609 003 B1**
(45) Date de publication et mention de la délivrance du brevet: **18.11.2020**
(21) Numéro de dépôt: 11758523.2
(22) Date de dépôt: 18.08.2011
(51) Int. Cl.: B62M 9/1342

(54) **DISPOSITIF POUR UN VÉLO ÉQUIPÉ DE PLATEAUX ET DE PIGNONS**
VORRICHTUNG FÜR EIN FAHRRAD MIT KETTENRÄDERN UND ZAHNKRÄNZEN
DEVICE FOR A BICYCLE PROVIDED WITH CHAIN WHEELS AND SPROCKETS

(30) Priorité: 24.08.2010 FR 1003442
(43) Date de publication de la demande: 03.07.2013
(73) Titulaire: Savard, Franck Jean, 17410 Saint Martin De Re (FR)
(72) Inventeur: Savard, Franck Jean, 17410 Saint Martin De Re (FR)
(74) Mandataire: Aquinov
(86) Numéro de dépôt international: PCT/FR2011/051933
(87) Numéro de publication internationale: WO 2012/042138

(56) Documents cités:
- WO-A1-2005/030567
- WO-A1-2008/108641
- WO-A1-2009/081083
- WO-A2-2004/074080
- US-A- 3 965 763
- US-A- 5 649 877

## Description

La présente invention concerne un dispositif unique de modification des développements sur un vélo équipé de plateaux et pignons.

Les vélos sont équipés, pour la plupart de deux dérailleurs, avant et arrière, avec une chaîne de transmission tendue entre ces deux dérailleurs.

Ce système, connu de longue date, peut apparaitre désuet mais il n'en est rien car il s'agit d'un agencement d'une très grande simplicité de fabrication industrielle, d'une très grande fiabilité et d'un coût tout à fait abordable.

Un montage de type connu comprend généralement au moins deux plateaux avant et un maximum de trois plateaux et un dérailleur avant, DA, apte à faire passer la chaîne de l'un à l'autre par une manoeuvre dite de déraillement. Ces plateaux sont montés sur l'axe de rotation des manivelles de pédalage.

Ce montage connu comprend également une cassette de pignons arrière, montée sur l'arbre de la roue arrière, comprenant généralement de 1 à 9 pignons, avec un mécanisme de roue libre interposé entre l'arbre et la cassette pour pouvoir arrêter le pédalage et bénéficier de l'inertie de roulage.

La chaîne passe sur cette cassette comme sur les plateaux et un dérailleur arrière, DR, est chargé de faire dérailler la chaîne d'un pignon à un autre.

On comprend dès lors qu'il existe un très grand nombre de développements égal au produit du nombre de plateaux par le nombre de pignons soit 27 développements pour un agencement à 3 plateaux et 9 pignons.

Ce très grand nombre de développements conduit à des redondances et des développements se trouvent être préjudiciables au bon fonctionnement ceci d'autant plus qu'il y a de développements.

En effet, les développements qui relèvent d'un croisement de chaîne important sont à proscrire car d'une part ils sont peu productifs car il engendrent des pertes dues aux frottements et d'autre part ils sont dangereux car ils provoquent des cassures de chaînes lors d'efforts exercés avec la chaîne croisée et pour le moins une usure très prématurée de ladite chaîne de façon générale.

On comprend dès lors que si l'on doit éliminer des développements donc faire des choix, que l'on a à manoeuvrer deux manettes, l'attention du cycliste devient vite détournée par ces manoeuvres au détriment en particulier de la sécurité et pour le moins du plaisir de rouler.

Ce sont ces raisons notamment qui ont conduit de nombreux pratiquants à ne pas doter leur vélo de tels équipements sophistiqués et si utiles.

Aussi, de nombreuses solutions ont été imaginées au cours du temps pour conserver le matériel existant, très répandu, des deux dérailleurs avec plus ou moins de plateaux et de pignons mais en simplifiant la manoeuvre et en éliminant les développements non souhaités.

Notamment, il a été imaginé de ne disposer qu'une seule commande pour les deux dérailleurs en synchronisant les manoeuvres des deux dérailleurs, simultanément. On connaît ainsi le brevet US 4 201 095 (Cirami) qui avait prévu une commande unique mais avec l'inconvénient qu'il n'y avait pas la progressivité souhaitée car en même temps qu'il est provoqué un déraillement de plateau, ce qui induit une forte modification du développement, il faut aussi diminuer le développement par un déraillement de pignons dans le sens inverse afin de compenser cet écart trop important.

Le brevet EP 727348 (Savard) a apporté une solution élégante au problème qui a donné lieu à une commercialisation d'un produit sous le nom de Synchroshift. Il s'agit d'une monocommande, intégrée à la poignée, par exemple moyennant un mécanisme tournant avec deux pistes avec des curseurs circulant dans ces pistes qui tirent ou poussent les câbles des dérailleurs avant DA et arrière DR.

Cette solution a été complétée par un agencement sous forme de boîtier fixé au cadre, ainsi que l'enseigne le brevet français FR 2 860 208 (Savard), qui est considéré comme étant l'état de l'art le plus proche de l'invention.

L'inconvénient de ces agencements est le chemin de câbles qui reste tortueux et qui rend les commandes un peu dures, surtout l'inconvénient est le caractère relativement volumineux qui est un frein à la commercialisation et à l'intégration. De plus, il a bien été indiqué que la transmission avec chaîne et deux dérailleurs avait un long passé mais aussi un avenir du fait de la simplicité et de la fiabilité de l'agencement, il faut donc un dispositif unique de modification des développements d'un vélo à deux dérailleurs qui soit compact, qui assure une traction des câbles de façon aussi rectiligne que possible de façon à permettre une manoeuvre souple surtout que ces agencements sont destinés à la plupart des gens donc non nécessairement à des sportifs et des avertis du vélo, il faut donc une manoeuvre très douce.

Enfin, il faut un nombre de pièces extrêmement réduit pour garantir une fiabilité certaine, une excellente accessibilité pour toute réparation, des pièces réalisables par moulage notamment en composite de sorte à réduire les coûts et à alléger le dispositif.

C'est l'objet du dispositif selon la présente invention de répondre à ces besoins en permettant la manoeuvre simultanée de déraillement des plateaux et pignons pour permettre de ne bénéficier que des développements utiles et non redondants, ceci du plus petit au plus grand avec une progressivité et avec un croisement limité de la chaîne.

La présente invention est maintenant décrite en regard des dessins annexés qui montrent un mode de réalisation particulier, non limitatif, les figures de ces dessins montrant respectivement :
- Figure 1 : une vue schématique d'une transmission à chaîne tendue entre des plateaux et des pignons, équipée d'un dérailleur avant et d'un dérailleur arrière ainsi que le dispositif de modification des développements selon l'invention,
- Figure 2 : une vue en perspective d'un dispositif de modification des développements selon l'invention,
- Figure 3 : une vue de l'arrière du dispositif de modification des développements selon l'invention avec le carter retiré,
- Figure 4 : une vue en perspective du dispositif de modification des développements selon l'invention avec le carter retiré,
- Figure 5 : une vue du dispositif de modification des développements selon l'invention, avec le carter en place sauf la face latérale extérieure côté fourchette de dérailleur avant,
- Figure 6 : une vue en perspective du dispositif de modification des développements selon l'invention avec la commande venant du cintre, le carter général et l'indexation ayant été retirés,
- Figure 7 : une vue en élévation latérale du dispositif de modification des développements selon l'invention avec le carter général retiré et l'indexation en place, et

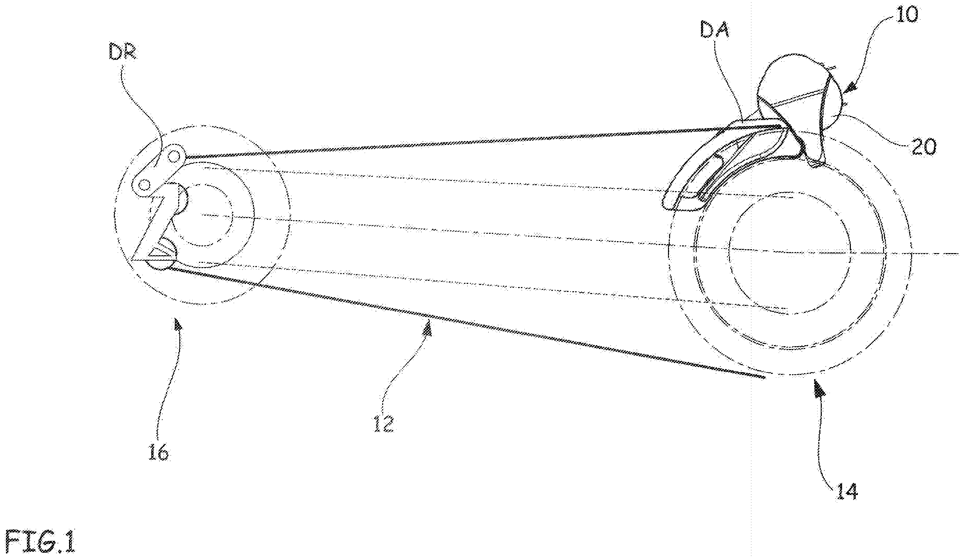

Sur la figure 1, on a représenté un dispositif 10 de modification des développements d'un vélo ainsi qu'un dérailleur arrière DR, de type connu, et une chaîne 12.

Cette chaîne attaque un ensemble 14 de plateaux une cassette 16 de pignons.

Un dérailleur DA avant de l'art antérieur comprend de façon connue, une fourchette dans laquelle passe la chaîne, cette fourchette étant montée sur un parallélogramme déformable, elle se déplace en translation perpendiculairement au plan du cadre de façon à placer la chaîne au droit de chaque plateau souhaité par l'utilisateur.

La commande de ce seul dérailleur avant DA assure la traction sur le parallélogramme pour le déplacer d'une position au droit du plateau de petit diamètre au droit du plateau de plus grand diamètre, en passant par le plateau intermédiaire lorsqu'il en est prévu un. Un ressort de rappel permet le retour au plateau de petit diamètre lorsque la commande est piloté en ce sens par l'utilisateur. L'effort est consenti par l'utilisateur pour faire passer la chaîne du plateau de petit diamètre au plateau de plus grand diamètre, à l'encontre du ressort de rappel.

De même, pour le dérailleur arrière DR, de façon connue la commande associée à ce dérailleur, permet à l'utilisateur de faire passer la chaîne du pignon de plus petit diamètre au pignon de plus grand diamètre en passant par tous les pignons de la cassette. Un ressort de rappel ramène la chaîne sur le petit pignon lorsque la commande l'y autorise à la demande de l'utilisateur. L'effort est consenti par l'utilisateur pour faire passer la chaîne du plus petit pignon au pignon de diamètre supérieur, à l'encontre du ressort de rappel.

Le dispositif de modification des développements selon la présente invention comprend un boîtier 20, monté de façon connue par un collier 22 sur le cadre 24 du vélo et sur le tube de selle de préférence, comme le sont les dérailleurs avant DA de l'art antérieur. Le but est en effet de maintenir l'agencement antérieur de façon générale afin de pouvoir assurer un montage en rétrofit ainsi que sur les nouveaux vélos en première monte.

Le boîtier 20 se trouve alors sensiblement au droit du pédalier, non représenté, un peu en aval par rapport au sens d'avancement du vélo qui est équipé, donc légèrement en amont de l'apex de la chaîne sur les plateaux et donc en amont de l'engagement des maillons de la chaîne sur les dents des plateaux.

Ce boîtier 20 comprend des moyens 26 de changement de plateaux et des moyens 28 de changement de pignons ainsi que des moyens 30 de commande desdits moyens 26 de changement de plateaux et desdits moyens 28 de changement des pignons, ces moyens 30 de commande étant manoeuvrables par l'utilisateur.

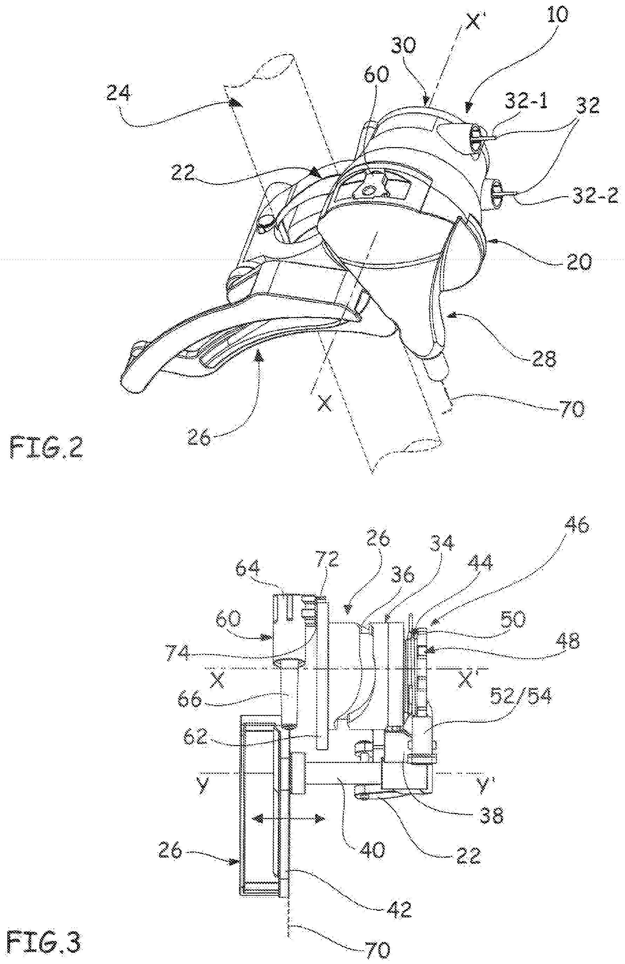

Les moyens 32 de manœuvre de ces moyens de commande peuvent être mécaniques sous forme de poignée tournante ou de manettes à cliquets ou sous forme hydraulique avec des pistons et des tuyaux de fluides hydrauliques, le but étant de pouvoir manoeuvrer un élément dans un sens et dans le sens opposé. Pour simplifier la description et pour retenir le meilleur mode de réalisation, notamment le plus simple, le plus fiable et le moins coûteux, on exemplifie pour la suite de la description avec des moyens 32 de manoeuvre par câbles avec une poignée tournante au cintre, non représentée, ce qui est aussi le plus instinctif. Les deux câbles 32-1, 32-2 de commande sont visibles sur les différentes figures comme cela sera détaillé plus avant mais ils apparaissent déjà sur la figure 2.

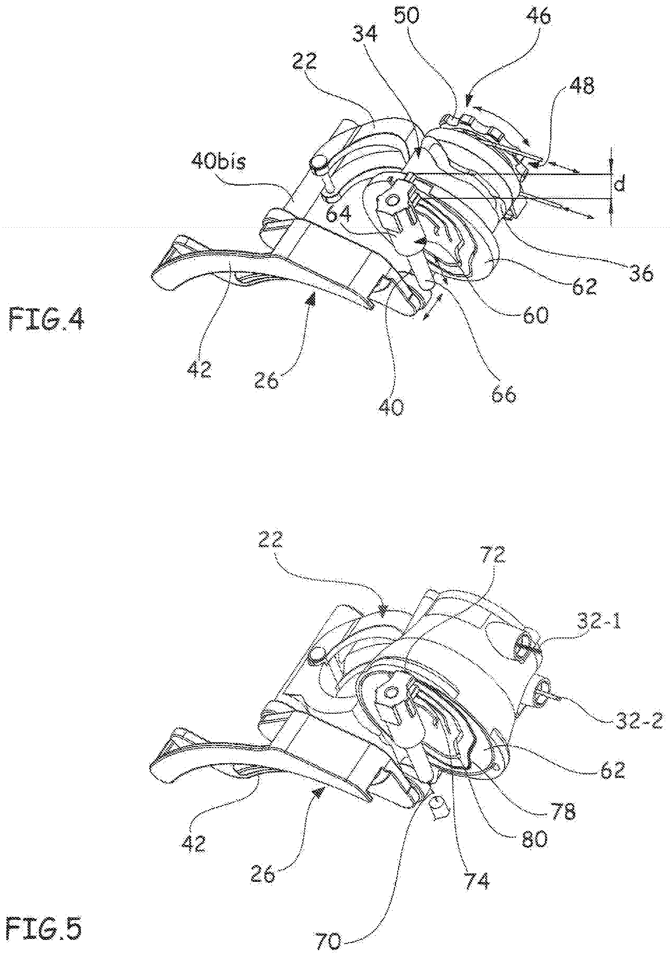

Sur les figures 3 et 4, les moyens 26 de changement de plateaux comprennent un tambour 34 de plateaux qui est monté à rotation autour d'un axe XX'.

Ce tambour 34 de plateaux comporte une piste 36 à profil établi.

Cette piste 36 reçoit un doigt 38 moteur, ce doigt 38 moteur étant apte à suivre le profil de ladite piste 36.

Le doigt 38 moteur est lui-même solidaire d'un axe 40 portant une fourchette 42, de type connu, apte à recevoir la chaîne 12 et à provoquer le déraillement de ladite chaîne d'un plateau à un autre.

La commande est ainsi directe du tambour 34 de plateaux à la fourchette 42. L'axe 40, support de la fourchette 42, est monté mobile en translation et fixe en rotation par rapport au boîtier 20, ceci suivant un axe YY' parallèle à l'axe XX', c'est-à-dire sensiblement perpendiculaire au plan du cadre.

Cet axe 40 est complété par un axe 40Bis, parfaitement parallèle à l'axe YY', coulissant dans un support de guidage fixe, en l'occurrence le collier 22. Cet axe 40 bis qui sert uniquement de guidage pour permettre un déplacement stable de la fourchette, sans mise en biais sous les efforts de frottement sur la chaîne, comme il sera expliqué plus avant lors de la description du fonctionnement.

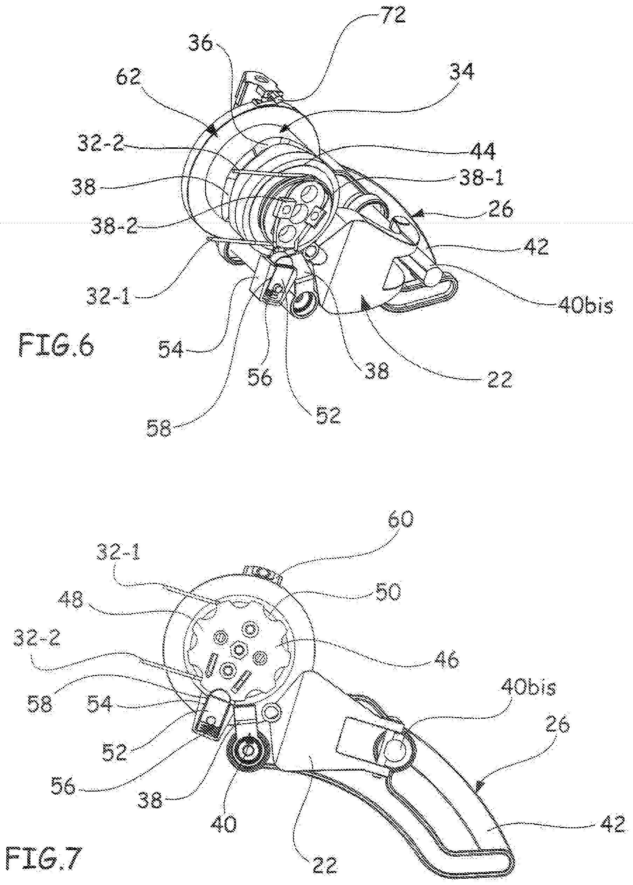

Ce tambour 34 de plateaux se prolonge par un double cabestan 44 qui constitue une partie des moyens 32 de manoeuvre et qui reçoit les câbles 32-1 et 32-2 avec des enroulements inversés. Ceci est bien visible sur la figure 6.

Les extrémités des câbles sont retenues par des serre-câbles 38-1 et 38-2.

Ces moyens 32 de manoeuvre comprennent en outre un indexeur 46 constitué d'un disque 48 avec des crans 50 ménagés sur la périphérie, régulièrement répartis sur cette périphérie. Ces crans 50 coopèrent avec un cliquet 52. Ce cliquet 52 est du type monté coulissant dans un logement 54 borgne, suivant une direction radiale par rapport audit disque 48, soumis à la force d'un ressort 56 de rappel qui tend à plaquer ledit cliquet dans chaque cran 50 lorsque l'un des crans vient au droit dudit cliquet, les crans et le cliquet ayant des profils conjugués.

Avantageusement, selon un perfectionnement de la présente invention, le cliquet 52 est monté dans le logement 54 avec un jeu angulaire permettant audit cliquet de basculer pour accompagner angulairement le disque 48 porteur de crans, sur un secteur limité, nonobstant le fait qu'un cran 50 coopère avec le cliquet. Un ressort 58 de rappel, par exemple un ressort à lame en U, assure le retour en position centrée.

Ceci permet la manoeuvre d'overshifting, c'est-à-dire la manoeuvre de dépassement d'une cote nominale pour favoriser le déraillement par amplification dudit déraillement mais en reprenant une position nominale parfaitement centrée, une fois obtenu le changement de plateau, comme cela sera explicité lors de la description du fonctionnement.

Les moyens 28 de changement de pignons comprennent un curseur 60, bien visible sur les figures 3, 4 et 5 et une joue 62 , solidaire du tambour 34 et donc du cabestan 44, en forme de disque.

Ce curseur 60 est à déplacement en translation, sensiblement vertical, ce curseur étant guidé par le boîtier 20 qui dispose d'une rainure de profil adaptée, non représentée. La direction de déplacement ZZ' dudit curseur est perpendiculaire à celle de l'axe XX' de rotation du tambour 34, sensiblement verticale.

Le curseur 60 se déplace dans un plan parallèle à celui de la joue 62, suivant un diamètre du disque constituant ladite joue 62.

Ce curseur comprend une tête 64 et un corps 66, l'ensemble étant muni d'un passage central 68 destiné à accueillir le câble 70 de manoeuvre du dérailleur arrière DR, immobilisé de façon connue par un serre câble au droit de la tête.

La tête 64 dispose de deux pions de guidage 72 supérieur et 74 inférieur, monolithiques avec ladite tête, disposés l'un au-dessus de l'autre suivant l'axe ZZ' de déplacement du curseur 60 et séparés l'un de l'autre d'une distance d. les pions ont une longueur différente, en l'occurrence, le pion 72 supérieur est d'une longueur supérieure à celle du pion 74 inférieur.

Le corps 66 est destiné à recevoir un ressort 76 d'assistance. Ce ressort 76 est d'une longueur aussi importante que possible pour assurer la progressivité avec une puissance telle qu'il compense sensiblement la puissance du ressort de rappel du dérailleur arrière DR, ceci lorsqu'il est à moitié comprimé ou détendu, comme cela sera expliqué lors de la description du fonctionnement du dispositif de modification des développements selon la présente invention.

La joue 62 comporte deux pistes 78 extérieure et 80 intérieure, en forme de spirale irrégulière, sensiblement concentriques par rapport à l'axe de rotation XX'.

La piste 78 extérieure est débouchante à la périphérie de la joue 62 tandis que la piste 80 intérieure est borgne.

Le profil des pistes 78 extérieure et 80 intérieure est adapté aux mouvements recherchés du curseur 60.

Ces deux pistes 78 extérieure et 80 intérieure reçoivent respectivement les pions 72 supérieur et 74 inférieur.

Ces deux pistes 78 extérieure et 80 intérieure ont la particularité d'être de profondeurs différentes. La piste 78 extérieure est plus profonde que la piste 80 intérieure et elles reçoivent respectivement les pions 72 supérieur, long et 74 inférieur, court.

Ainsi un seul pion coopère avec une seule piste simultanément.

Le fonctionnement du dispositif 10 de modification des développements est maintenant décrit en regard d'un agencement comprenant deux plateaux A et B et 5 pignons 1 à 5, le plateau A pour le plus petit, B pour le plus grand et 1 pour le plus grand pignon et 5 pour le plus petit pignon.

L'utilisateur est sur le plus petit développement par la combinaison A1.

Pour ce développement, les moyens 32 de manoeuvre ont agi sur le cabestan 44 qui a enroulé le câble 32-2 par exemple et déroulé le câble 32-1.

La position est alors celle de la figure 3.

Le doigt 38 de manoeuvre est déplacé du côté du cadre donc la chaîne est contrainte sur le plus petit plateau A.

Le curseur 60 est en position haute avec le pion 74 inférieur engagé et en butée dans la piste 80 intérieure tandis que le pion 72 supérieur est sorti de la piste 78 extérieure et débouchante. Le câble 70 du dérailleur arrière DR est tendu, à l'encontre du ressort de rappel dudit dérailleur arrière DR.

Lorsque l'utilisateur exerce une action sur les moyens 32 de manœuvre, dans le sens d'un poignée d'accélérateur par exemple pour une poignée tournante, le câble 32-1 s'enroule et le câble 32-2 se déroule, le cabestan 44 tourne dans le sens des aiguilles d'une montre lorsqu'il est vu en élévation latérale.

Le tambour 34 tourne et la piste 36 sensiblement droite maintient la fourchette 42 en place, si bien que la chaîne reste sur le même petit plateau A.

Simultanément, la joue 62 tourne et la piste de guidage 80 intérieure qui est orientée vers l'intérieur déplace le curseur 60 sous l'action du pion 74 qui en est solidaire, si bien que le curseur descend, relâchant le câble 70 et laissant le dérailleur arrière DR se déplacer, ce qui provoque le déraillement de la chaîne du pignon 1 au pignon 2 conduisant au développement A2.

On note que, simultanément, l'utilisateur est guidé dans sa manoeuvre par l'indexeur 48 dont les crans 50 coopèrent avec le cliquet 52.

Lorsque l'utilisateur exerce une nouvelle action sur les moyens 32 de manoeuvre, le câble 32-1 s'enroule de nouveau et le câble 32-2 se déroule de nouveau, le cabestan 44 tourne toujours dans le sens des aiguilles d'une montre lorsqu'il est vu en élévation latérale.

Le tambour 34 tourne et la piste 36 sensiblement droite maintient la fourchette 42 en place, si bien que la chaîne reste encore sur le même petit plateau A.

Simultanément, la joue 62 tourne et la piste de guidage 80 intérieure qui est orientée vers l'intérieur déplace le curseur 60 sous l'action du pion 74 qui en est solidaire, si bien que le curseur descend de nouveau, relâchant le câble 70 et laissant le dérailleur arrière DR se déplacer, ce qui provoque le déraillement de la chaîne du pignon 2 au pignon 3 conduisant au développement A3.

Le pion supérieur 72 s'engage dans la piste de guidage 78 extérieure, sans action.

La chaîne atteint le croisement maximum souhaitable.

On note que, simultanément, l'utilisateur est guidé dans sa manoeuvre par l'indexeur 48 dont les crans 50 coopèrent de nouveau avec le cliquet 52, la sensation étant toujours la même pour l'utilisateur qui ressent le même "clic".

Lorsque l'utilisateur exerce une troisième action sur les moyens 32 de manœuvre, le câble 32-1 s'enroule de nouveau et le câble 32-2 se déroule de nouveau, d'une même longueur, le cabestan 44 tourne toujours dans le sens des aiguilles d'une montre lorsqu'il est vu en élévation latérale.

Le tambour 34 tourne et la piste 36 est maintenant inclinée. Le doigt 38 moteur se déplace suivant l'axe XX', l'axe 40 qui en est solidaire se déplace également et déplace simultanément la fourchette 42, si bien que la chaîne déraille et passe du petit plateau A au grand plateau B.

Simultanément, la joue 62 tourne et la piste de guidage 80 intérieure devient plus profonde à cet endroit si bien que le pion 74 n'exerce plus d'action. Le pion 72 est alors guidé par la piste extérieure 78 qui ramène le curseur 60 vers le haut. Le curseur 60 monte et tire sur le câble 70 et conduit le dérailleur arrière DR se déplacer dans le sens inverse, ce qui provoque le déraillement de la chaîne du pignon 3 au pignon 2 conduisant au développement B2.

Le passage du petit plateau A au grand plateau B provoquant une modification importante du développement, cette modification est atténuée par le passage d'un pignon plus petit 3 à un pignon plus grand 2 si bien que la progressivité est conservée.

La chaîne retrouve un bon alignement.

On note que, simultanément, l'utilisateur est toujours guidé dans sa manoeuvre par l'indexeur 48 dont les crans 50 coopèrent de nouveau avec le cliquet 52, la sensation étant toujours la même pour l'utilisateur qui ressent le même "clic". L'indexeur comme le cabestan tourne toujours dans le même sens.

Lorsque l'utilisateur poursuit son action sur les moyens 32 de manoeuvre, l'ensemble cabestan 44, tambour 34, indexeur 48 et joue 62 tourne.

L'axe 40 reste immobile en translation puisque la piste 36 redevient rectiligne, le curseur 38 se déplace dans la piste mais sans translation suivant l'axe XX' donc la fourchette 42 maintient la chaîne sur le plateau B.

Par contre, le pion 72, toujours engagé dans la piste de guidage 78 extérieure, provoque un déplacement du curseur vers le bas donc un relâchement du câble 70 du dérailleur arrière DR. Le ressort de rappel du dérailleur arrière provoque le déplacement de la chape dudit dérailleur arrière DR et donc le déraillement de la chaîne du pignon 2 vers le pignon 3. On obtient la combinaison B3.

La chaîne est de plus en plus alignée.

Toute manoeuvre supplémentaire conduit la chaîne à dérailler d'un pignon de plus grand diamètre vers un pignon de plus petit diamètre, augmentant le développement à travers les combinaisons B4 et B5.

On a ainsi la succession progressive des développements :
- A1, A2, A3, B2, B3, B4, B5.

Le dispositif selon la présente invention permet d'obtenir une progressivité comme cela a été le cas dans l'art antérieur mais avec les avantages liés à l'agencement particulier.

En effet, on comprend que la fourchette 42 est en manoeuvre directe sans câble, sans frottement, si ce n'est celui du doigt 38 dans la piste 36, ce qui est négligeable. On note la suppression du ressort de rappel de la fourchette existant sur les dérailleurs avant de l'art antérieur, pour le passage du plus grand plateau au plus petit plateau.

Ainsi le dérailleur avant DA est différent de ceux de l'art antérieur, totalement intégré au boîtier et à commande directe, en supprimant tout câble intermédiaire, tout ressort de rappel sauf à prévoir un éventuel ressort d'assistance au droit des axes 40 et/ou 40bis.

Le cabestan 44 à double enroulement travaille toujours en traction, ce qui est le plus efficace à l'inverse des câbles uniques travaillant en push/pull qui doivent présenter un diamètre assez important et dont les frottements sont élevés.

Ces câbles 32-1 et 32-2 sont quasiment en direct du cintre et ne nécessitent que très peu de courbes, qui plus est, à grand rayon de courbure, donc non pénal isantes.

Quant au dérailleur arrière DA, le câble 70 de manoeuvre est quasiment direct puisqu'il sort du boîtier 20 pour atteindre le dérailleur arrière avec un simple S à fort rayons de courbure.

Là encore, les frottements sont minimes.

Il n'y a donc que très peu de frottements parasites, ce qui conduit à un usage facile et sans effort des moyens 32 de manoeuvre par l'utilisateur qui peut être un enfant, sans difficulté.

Du point de vue encombrement, les pistes 78 et 80 à profondeurs différentes, agencées sur la joue 62 et le curseur à deux pions 72 et 74 permettent une compacité certaine, autorisant le montage du dispositif sur tous les types de cadres de vélo.

On note aussi que le boîtier peut avantageusement être réalisé en résine pour des facilités de moulage, des raisons de coût et des raisons de poids.

Le dispositif selon la présente invention autorise également le montage sur les deux grands types de vélos, sans suspension ou suspendus. En effet, le câble 70 peut sortir vers le haut ou vers le bas suivant les besoins, ceci avec les mêmes pièces, il suffit de faire pivoter de 180°, les organes associés à savoir la joue 62, le curseur 60 avec son ressort 76 d'assistance et la partie correspondante du boîtier 20 par rapport au tambour 34.

La sortie du câble 70 peut donc être orientée vers le haut ou vers le bas pour passer au-dessus ou au-dessous du bras arrière.

On constate le nombre réduit de pièces et on en déduit la fiabilité qui en résulte. Les interventions de maintenance sont réduites et de façon avantageuse, des soufflets peuvent être adjoints pour protéger les axes 40 et 40bis mobiles en translation, par exemple

Les différentes pièces tournantes travaillent sur leur périphérie donc avec des couples maxima pour un encombrement minimum du boîtier.

Dans le cas des pistes de guidage 78 et 80, le couple est maximal sur le curseur pour la remontée de la chaîne sur les pignons de plus grand diamètre.

## Revendications

1. Dispositif unique de modification des développements sur un vélo équipé de plateaux (14) et de pignons (16), d'une chaîne (12) tendue entre ces plateaux et pignons ainsi que d'un dérailleur arrière DR, ledit dispositif unique de modification des développements comprenant un boîtier (20) unique intégrant:
- des moyens (26) de changement de plateaux comprenant un tambour (34) de plateaux, monté à rotation autour d'un axe XX', une piste (36) à profil établi ménagée dans ledit tambour, un doigt (38) moteur apte à suivre le profil de ladite piste (36), ce doigt étant solidaire d'un axe (40) portant une fourchette (42) apte à recevoir la chaîne (12) et à provoquer le déraillement de ladite chaîne d'un plateau à un autre,
- des moyens (28) de changement de pignons par l'intermédiaire du dérailleur arrière DR, et
- des moyens (30) de commande desdits moyens (26) de changement de plateaux et desdits moyens (28) de changement des pignons.

2. Dispositif unique de modification des développements sur un vélo selon la revendication 1, **caractérisé en ce qu'**il comprend des moyens (32) de manoeuvre des moyens (30) de commande, ces moyens (32) de manoeuvre comprenant deux câbles (32-1, 32-2) actionnés ainsi qu'un cabestan (44) destiné à recevoir lesdits deux câbles avec des enroulements inversés.

3. Dispositif unique de modification des développements sur un vélo selon la revendication 2, **caractérisé en ce que** ces moyens (32) de manoeuvre comprennent un indexeur (46) constitué d'un disque (48) avec des crans (50) ménagés sur la périphérie, un cliquet (52) du type monté coulissant dans un logement (54) borgne, suivant une direction radiale par rapport audit disque (48), soumis à la force d'un ressort (56) de rappel.

4. Dispositif unique de modification des développements sur un vélo selon la revendication 3, **caractérisé en ce que** le cliquet (52) est monté dans le logement (54) avec un jeu angulaire permettant audit cliquet de basculer pour accompagner angulairement le disque (48) porteur de crans (50) et comprend un ressort (58) de rappel, par exemple un ressort à lame en U, pour assurer le retour en position centrée.

5. Dispositif unique de modification des développements sur un vélo, selon l'une quelconque des revendications précédentes, **caractérisé en ce que** l'axe (40), support de la fourchette (42), est monté mobile en translation et fixe en rotation par rapport au boîtier (20), suivant un axe YY' parallèle à l'axe XX'.

6. Dispositif unique de modification des développements sur un vélo selon l'une quelconque des revendications 2 à 5, **caractérisé en ce que** les moyens (28) de changement de pignons comprennent un curseur (60), une joue (62) solidaire du cabestan (44), ledit curseur (60) étant mobile en translation suivant une direction de déplacement ZZ', dans un plan parallèle à celui de la joue (62), le curseur (60) comprenant deux pions de guidage (72, 74) supérieur et inférieur, et la joue (62) comprenant deux pistes extérieure (78) et intérieure (80) aptes à coopérer avec lesdits pions.

7. Dispositif unique de modification des développements sur un vélo selon la revendication 6, **caractérisé en ce que** les pions (72,74) ont des longueurs différentes et les pistes (78, 80) ont des profondeurs différentes de sorte qu'un seul pion coopère avec une seule piste à la fois.

8. Dispositif unique de modification des développements sur un vélo selon la revendication 6 ou 7, **caractérisé en ce que** le curseur (60) comprend une tête (64) et un corps (66), l'ensemble étant muni d'un passage central destiné à accueillir un câble (70) de manoeuvre du dérailleur arrière DR.

9. Dispositif unique de modification des développements sur un vélo selon la revendication 8, **caractérisé en ce que** le corps (66) reçoit un ressort d'assistance.

10. Dispositif unique de modification des développements sur un vélo selon l'une quelconque des revendications précédentes, **caractérisé en ce qu'**une partie du boîtier (20) et les organes associés peuvent être pivotés de 180° pour disposer d'une sortie vers le haut ou vers le bas.

## Patentansprüche

1. Einzelvorrichtung zum Wechseln der Gänge an einem Fahrrad, das mit Kettenblättern (14) und Ritzeln (16), einer zwischen diesen Kettenblättern und Ritzeln gespannten Kette (12) und einem hinteren RD-Schaltwerk ausgestattet ist, wobei die Einzelvorrichtung zum Wechseln der Gänge ein Einzelgehäuse (20) umfasst, das Folgendes beinhaltet:
- Mittel (26) zum Wechseln der Kettenblätter, umfassend eine um eine Achse XX' drehbar montierte Trommel (34) des Kettenblatts, eine in der Trommel angeordnete Spur (36) mit festgelegtem Profil, einen beweglichen Finger (38), der dem Profil der Spur (36) folgen kann, wobei dieser Finger fest mit einer Achse (40) verbunden ist, die eine Gabel (42) trägt, die die Kette (12) aufnehmen kann und das Umwerfen der Kette von einem Kettenblatt zum anderen auslösen kann,
- Mittel (28) zum Wechseln der Ritzel über das hintere RD-Schaltwerk und
- Mittel (30) zur Steuerung der Mittel (26) zum Wechseln der Kettenblätter und der Mittel (28) zum Wechseln der Ritzel.

2. Einzelvorrichtung zum Wechseln der Gänge an einem Fahrrad nach Anspruch 1, **dadurch gekennzeichnet, dass** sie Mittel (32) zur Betätigung der Mittel (30) zur Steuerung umfasst, wobei diese Mittel (32) zur Betätigung zwei betätigte Züge (32-1, 32-2) sowie eine Winde (44) umfassen, die dazu bestimmt ist, beiden Züge mit umgekehrten Wicklungen aufzunehmen.

3. Einzelvorrichtung zum Wechseln der Gänge an einem Fahrrad nach Anspruch 2, **dadurch gekennzeichnet, dass** diese Mittel (32) zur Betätigung einen Indexierer (46) umfassen, der aus einer Scheibe (48) mit Rasten (50), die am Umfang vorgesehen sind, und einer Sperrklinke (52) des Typs besteht, die in einer Blindaufnahme (54) in radialer Richtung in Bezug auf die Scheibe (48) gleitend montiert ist, die der Kraft einer Rückholfeder (56) ausgesetzt ist.

4. Einzelvorrichtung zum Wechseln der Gänge an einem Fahrrad nach Anspruch 3, **dadurch gekennzeichnet, dass** die Sperrklinke (52) in der Aufnahme (54) mit einem Winkelspiel montiert ist, das ein Kippen der Sperrklinke ermöglicht, um die Scheibe (48), die Rasten (50) trägt, winkelig zu begleiten, und eine Rückholfeder (58), beispielsweise eine U-förmige Blattfeder umfasst, um die Rückführung in die zentrierte Position zu gewährleisten.

5. Einzelvorrichtung zum Wechseln der Gänge an einem Fahrrad gemäß einem der vorhergehenden Ansprüche, **dadurch gekennzeichnet, dass** die Achse (40), die die Gabel (42) stützt, in Bezug auf das Gehäuse (20) entlang einer zur Achse XX' parallelen Achse yy' verschiebbar und drehfest montiert ist.

6. Einzelvorrichtung zum Wechseln der Gänge an einem Fahrrad gemäß einem der Ansprüche 2 bis 5, **dadurch gekennzeichnet, dass** die Mittel (28) zum Wechseln der Ritzel einen Schieber (60) und eine mit der Winde (44) fest verbundene Wange (62) umfassen, wobei der Schieber (60) entlang einer Bewegungsrichtung ZZ' in einer zur Ebene der Wange (62) parallelen Ebene translatorisch beweglich ist, wobei der Schieber (60) zwei obere und untere Führungszapfen (72, 74) umfasst und die Wange (62) zwei Spuren, eine äußere Spur (78) und eine innere Spur (80), umfasst, die mit den Zapfen in zusammenwirken können.

7. Einzelvorrichtung zum Wechseln von Gängen an einem Fahrrad nach Anspruch 6, **dadurch gekennzeichnet, dass** die Zapfen (72, 74) unterschiedliche Längen und die Spuren (78, 80) unterschiedliche Tiefen aufweisen, derart, dass ein einziger Zapfen jeweils nur mit einer einzigen Spur zusammenwirkt.

8. Einzelvorrichtung zum Wechseln der Gänge an einem Fahrrad nach Anspruch 6 oder 7, **dadurch gekennzeichnet, dass** der Schieber (60) einen Kopf (64) und einen Körper (66) umfasst, wobei die Anordnung mit einem zentralen Durchgang versehen ist, der zur Aufnahme eines Zugs (70) zur Betätigung des hinteren DR-Schaltwerks vorgesehen ist.

9. Einzelvorrichtung zum Wechseln der Gänge an einem Fahrrad nach Anspruch 8, **dadurch gekennzeichnet, dass** der Körper (66) eine Unterstützungsfeder aufnimmt.

10. Einzelvorrichtung zum Wechseln der Gänge an einem Fahrrad nach einem der vorhergehenden Ansprüche, **dadurch gekennzeichnet, dass** ein Teil des Gehäuses (20) und die zugehörigen Elemente um 180 geschwenkt werden können, um über einen Ausgang nach oben oder nach unten zu verfügen.

## Claims

1. Single device for shifting gears on a bicycle equipped with chainwheels (14) and sprockets (16), a chain (12) stretched between these chainwheels and sprockets, and a rear derailleur DR, said single device for shifting gears comprising a single casing (20) which comprises:
- means (26) for changing chainwheels, comprising a chainwheel drum (34) rotatably mounted about an axis XX', a track (36) having an established profile formed in said drum, a drive finger (38) capable of following the profile of said track (36), this finger being rigidly connected to a shaft (40) carrying a fork (42) which is capable of receiving the chain (12) and causing the shifting of said chain from one chainwheel to another,
- means (28) for changing sprockets via the rear derailleur DR, and
- means (30) for controlling said means (26) for changing chainwheels and said means (28) for changing sprockets.

2. Single device for shifting gears on a bicycle according to claim 1, **characterized in that** it comprises means (32) for operating the control means (30), these operating means (32) comprising two actuated cables (32-1, 32-2) and a capstan (44) intended to receive said two cables with inverted windings.

3. Single device for shifting gears on a bicycle according to claim 2, **characterized in that** these operating means (32) comprise an indexer (46) consisting of a disk (48) having notches (50) formed on the periphery, and a pawl (52) which is slidably mounted in a blind housing (54), in a radial direction relative to said disk (48), subject to the force of a return spring (56).

4. Single device for shifting gears on a bicycle according to claim 3, **characterized in that** the pawl (52) is mounted in the housing (54) with angular play so as to allow said pawl to tilt in order to angularly accompany the disk (48) which has notches (50), and comprises a return spring (58), for example a U-shaped leaf spring, to ensure the return to the centered position.

5. Single device for shifting gears on a bicycle according to any of the preceding claims, **characterized in that** the shaft (40), which supports the fork (42), is mounted so as to be movable in translation and fixed in rotation with respect to the casing (20), along an axis yy' parallel to the axis XX'.

6. Single device for shifting gears on a bicycle according to any of claims 2 to 5, **characterized in that** the means (28) for changing sprockets comprise a slider (60) and a cheek (62) rigidly connected to the capstan (44), said slider (60) being movable in translation in a direction of movement ZZ', in a plane parallel to that of the cheek (62), the slider (60) comprising two upper and lower guide pins (72, 74), and the cheek (62) comprising two outer tracks (78) and inner tracks (80) suitable for cooperating with said pins.

7. Single device for shifting gears on a bicycle according to claim 6, **characterized in that** the pins (72, 74) have different lengths and the tracks (78, 80) have different depths such that a single pin cooperates with only one track at a time.

8. Single device for shifting gears on a bicycle according to either claim 6 or claim 7, **characterized in that** the slider (60) comprises a head (64) and a body (66), the assembly being provided with a central passage intended to accommodate a cable (70) for operating the rear derailleur DR.

9. Single device for shifting gears on a bicycle according to claim 8, **characterized in that** the body (66) receives a booster spring.

10. Single device for shifting gears on a bicycle according to any of the preceding claims, **characterized in that** part of the casing (20) and the associated members can be pivoted by 180° to have an outlet toward the top or toward the bottom.
